# EUROPEAN PATENT SPECIFICATION

(11) **EP 3 226 478 B1**
(45) Date of publication and mention of the grant of the patent: **27.05.2020**
(21) Application number: 16197261.7
(22) Date of filing: 04.11.2016
(51) Int. Cl.: H04L 12/26, G06Q 30/00

(54) **METHODS AND SYSTEMS FOR DISTRIBUTED TESTING OF NETWORK CONFIGURATIONS FOR ZERO-RATING**
VERFAHREN UND SYSTEME ZUM VERTEILTEN PRÜFEN VON NETZWERKKONFIGURATIONEN FÜR ZERO-RATING
PROCÉDÉS ET SYSTÈMES DE TEST RÉPARTI DE CONFIGURATIONS DE RÉSEAU POUR TAUX ZÉRO

(30) Priority: 28.03.2016 US 201615083168; 29.03.2016 WO PCT/US2016/024770
(43) Date of publication of application: 04.10.2017
(73) Proprietor: Facebook, Inc., Menlo Park, CA 94025 (US)
(72) Inventor: VUOLTEENAHO, Heikki, Menlo Park, CA California 94025 (US); VUORNOS, Lauri, Menlo Park, CA California 94025 (US); TUTUNCUOGLU, Kaya, Menlo Park, CA California 94025 (US)
(74) Representative: Murgitroyd & Company

(56) References cited:
- US-A1- 2006 034 185
- US-A1- 2012 209 990
- US-B1- 6 915 344

## Description

### TECHNICAL FIELD

This relates generally to network communications, including but not limited to distributing testing plans for network configuration regarding zero-rating on electronic devices from a server device.

### BACKGROUND

Mobile devices have become an increasingly dominant means through which consumers access, download, and consume electronic content over the Internet.

Despite substantial advancements in telecommunications technology, however, achievable access to the Internet and data rates for accessing content on the Internet are still limited. Considering the limited availability of Internet access in certain geographic regions, such as developing countries, consumers often have difficulty accessing the Internet and therefore are often left frustrated when using mobile devices. Furthermore, it is difficult to monitor the network configuration on a server system to understand whether the network is properly configured and the services for Internet access are properly provided to respective user devices (e.g., mobile devices).

US 6,915,344 B1 discloses a network test system that utilizes known good responses when testing responses from in-test servers. The test system includes a verification server that is known to provide correct responses. In-test servers are subjected to very high rates of requests, and the responses are compared to responses from the verification server. Hash values are used to represent the correct responses, and are compared to similar hash values produced from the actual responses of the in-test servers.

US 2006/034185 A1 describes an invention wherein the end-to-end services provided to an end-user by a service provider in a communications network can be tested by a system including a testing agent embedded within a connectivity device and a receiving server for receiving and analyzing test data from the connectivity device. The testing agent performs one or more tests to simulate a user's activities and obtain data regarding the simulated activities, for example simulating a user's activities by proactively consuming and measuring the end-to-end performance of services provided by the service provider.

In US 2012/209990 A1, methods and systems for providing a zero rating service to an end-user device are described. A method for providing a zero rating service to an end-user device involves redirecting a request that is directed to a third party URL from an end-user device to a zero rating URL and performing a URL transformation in response to the redirected request.

### SUMMARY

Accordingly, there is a need for methods, devices, and systems for improving network operability.

The invention is set out in the independent claims 1, 13 and 14 and relates to distributing testing of network configuration for zero-rating from a server system to user devices. Preferred embodiments are defined by the dependent claims. Zero-rated (e.g., free) access to certain content (e.g., zero-rated content) on the Internet may be provided to users, while non-zero-rated (e.g., paid) access to other content (e.g., non-zero-rated content) on the Internet may also be offered. Zero-rated content thus may be accessed without being charged by a network provider for network access, while accessing non-zero-rated content results in charges being levied by the network provider for network access. The network configuration should be monitored to ensure that the zero-rated content is properly served to respective user devices for free. Furthermore, the non-zero-rated content should not be provided to any user device without the user device paying for the non-zero-rated access. By distributing testing of network configurations for zero-rating from the server system to respective user devices, the server system can timely monitor whether the network is properly configured and operated to offer zero-rating services to the user devices.

### BRIEF DESCRIPTION OF THE DRAWINGS

For a better understanding of the various described embodiments, reference should be made to the Description of Embodiments below, in conjunction with the following drawings. Like reference numerals refer to corresponding parts throughout the figures and description.
- **Figure 1**: is a block diagram illustrating a network architecture, in accordance with some embodiments.
- **Figure 2**: is a block diagram illustrating a user device, in accordance with some embodiments.
- **Figure 3**: is a block diagram illustrating a server system, in accordance with some embodiments.
- **Figure 4**: is a block diagram illustrating a model used for testing network configuration regarding zero-rating, in accordance with some embodiments.
- **Figure 5**: is a flow diagram illustrating a method for distributing testing plans, in accordance with some embodiments.

### DESCRIPTION OF EMBODIMENTS

It will also be understood that, although the terms first, second, etc. are, in some instances, used herein to describe various elements, these elements should not be limited by these terms. These terms are used only to distinguish one element from another. For example, first data could be termed second data, and, similarly, second data could be termed first data, without departing from the scope of the various described embodiments. The first data and the second data are both data, but they are not the same data.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

As used herein, the term "exemplary" is used in the sense of "serving as an example, instance, or illustration" and not in the sense of "representing the best of its kind."

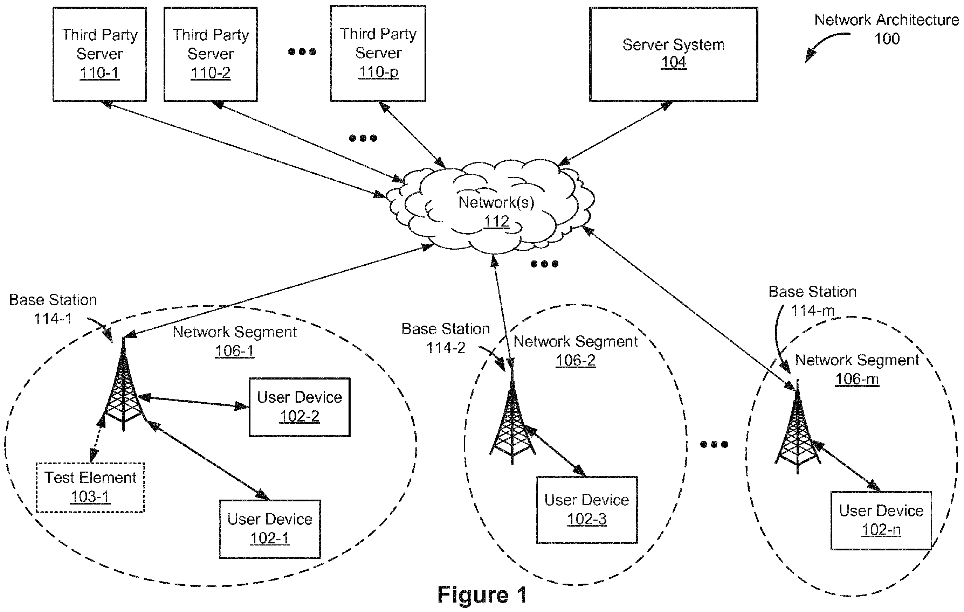

Figure 1 illustrates a network architecture 100 in accordance with some embodiments. The network architecture 100 is used for distributing testing plans to user devices for checking whether the network, or a network segment, is configured properly. For example, the network architecture 100 is used for checking whether a configuration for zero-rating (e.g., free network access to certain Internet content) and/or non-zero-rating (e.g., paid network access to certain Internet content) is correct. By using zero-rating services, a user can access one or more IP addresses for free without being charged for network access. Whereas for non-zero rating services, a user pays service fees to a network operator to access one or more IP addresses.

The network architecture 100 includes a number of user devices (also called "client device," "client systems," "client computers," or "clients") 102-1, 102-2, ... 102-n communicably connected to a server system 104 by one or more networks 112 (e.g., the Internet, cellular telephone networks, mobile data networks, other wide area networks, local area networks, metropolitan area networks, and so on). In some embodiments, the one or more networks 112 include a public communication network (e.g., the Internet and/or a cellular data network), a private communications network (e.g., a private LAN or leased lines), or a combination of such communication networks.

The network architecture 100 includes one or more network segments 106-1, 106-2, ... 106-m corresponding to one or more base stations 114-1, 114-2, ... 114-m respectively. (While each segment is shown corresponding to a single base station, a segment may correspond with multiple base stations.) In some embodiments, the network connection within a network segment is provided by a certain network operator (e.g., a network service provider, a network carrier, or a cellular company) that owns or controls one or more corresponding base stations and related infrastructure for providing network services to the user devices within the network segment. For example, the base station 114 (e.g., 114-1) of a corresponding network segment 106 (e.g., 106-1) communicably connects one or more user devices 102 (e.g., 102-1 and 102-2) to one another and/or to the networks 112.

In some embodiments, the user devices 102 are mobile devices and/or fixed-location devices. For example, the user devices 102 include computing devices such as feature phones, smart phones, smart watches, personal digital assistants, portable media players, tablet computers, 2D gaming devices, 3D (e.g., virtual reality) gaming devices, laptop computers, desktop computers, televisions with one or more processors embedded therein or coupled thereto, in-vehicle information systems (e.g., an in-car computer system that provides navigation, entertainment, and/or other information), and/or other appropriate computing devices that can be used to communicate with the server system 104. In some embodiments, the server system 104 is a single computing device such as a computer server. In other embodiments, the server system 104 is implemented by multiple computing devices working together to perform the actions of a server system (e.g., cloud computing). The server system 104 is distinct and independent from network operators. In some embodiments, the server system 104 is capable of identifying certain network issues associated with one or more different network operators respectively. For example, the server system 104 can identify network congestion, network error(s), and/or certain network configurations with regard to zero rating and/or other services) associated with a respective network operator for a respective network segment. In some embodiments, the server system 104 can identify certain network issues associated with a network operator without any help from the network operator.

In some embodiments, user devices 102 are associated with users (not shown) who employ the user devices 102 to access one or more IP addresses (e.g., including zero-rated IP addresses and/or non-zero-rated IP addresses). In some embodiments, the requests to access the one or more IP addresses are forwarded to and routed by one or more modules of the server system 104 or a separate server system (not shown). The user devices 102 execute web browser applications and/or other applications that can be used to access the one or more IP addresses.

In some embodiments, a user interacting with the user devices 102 is provided with zero-rating services. The zero-rating services may be provided, tested, and monitored by the server system 104. Alternatively, the zero-rating services are provided by a separate server system (not shown), but are tested and monitored by the server system 104. In some embodiments, by using the zero-rating services, the user devices 102 can access one or more pre-determined IP addresses for free. For example, the user devices 102 can download, upload, and/or view a webpage or use an application associated with a predetermined IP address for free, without being charged for network access. Thus these types of predetermined IP addresses are called zero-rated IP addresses. The content from zero-rated web pages and/or applications is called zero-rated content. In some embodiments, the user devices 102 can access one or more IP addresses that are not zero-rated IP addresses by paying service fees to a network operator. These IP addresses that require paid network access are called non-zero-rated IP addresses, and the content provided by the non-zero-rated IP addresses is called non-zero-rated content.

The network architecture 100 may also include third-party servers 110-1, 110-2, ... 110-p. In some embodiments, a given third-party server 110 is used to host third-party websites that provide web pages to user devices 102. In some embodiments, a given third-party server is used to host third-party applications that are used by client devices 104. As discussed above, a server system (e.g., the server system 104 or a separate server system) may route or redirect requests from user devices 102 to respective third-party servers 110. In some embodiments, the server system (e.g., the server 104) uses inline frames ("iframes") to nest independent websites within a network session (e.g., a zero-rated or non-zero-rated session). In some embodiments, the server system (e.g., the server 104) uses iframes to enable third-party developers to create applications that are hosted separately by a third-party server 110, but operate within a session of a user and are accessed through the user's profile in the server system. Exemplary third-party applications include applications for books, business, communication, contests, education, entertainment, fashion, finance, food and drink, games, health and fitness, lifestyle, local information, movies, television, music and audio, news, photos, video, productivity, reference material, security, shopping, sports, travel, utilities, social networking, and the like. In some embodiments, a given third-party server 110 is used to provide third-party content (e.g., news articles, reviews, message feeds, etc.).

In some embodiments, the respective IP addresses of one or more third-party servers 110 are predetermined to be zero-rated IP addresses configured to provide zero-rated content to the user devices 102. A user device 102 does not need to pay any data usage fee to a network provider for viewing, downloading, and/or uploading data to the one or more zero-rated IP addresses. In some embodiments, the respective IP addresses of one or more third-party servers 110 are non-zero-rated IP addresses that provide non-zero-rated (e.g., paid) content. A user device 102 pays a data usage fee to a network provider for viewing, downloading, and/or uploading data to the one or more non-zero-rated IP addresses.

In some embodiments, a given third-party server 110 is a single computing device, while in other embodiments, a given third-party server 110 is implemented by multiple computing devices working together to perform the actions of a server system (e.g., cloud computing).

Optionally, the network architecture 100 further comprises a test element (e.g., 103-1) located within a network segment (e.g., 106-1) for collecting baseline data related to the network segment. In some embodiments, the test element 103 is a computing device including one or more processors, memory, and one or more programs stored in the memory and configured to be executed by the one or more processors. The one or more programs include instructions (e.g., test scripts) to be executed by the test element 103 for testing network connections associated with the network segment. For example, the one or more programs include Javascript code which, when executed by the one or more processors, causes the test element 103 to send requests to one or more predetermined IP addresses (e.g., including zero-rated IP addresses and/or non-zero-rated IP addresses), collect results of the requests, and send the collected results to the server system 104. In some embodiments, the test element 103 is provided entirely by or in conjunction with infrastructure of a third-party provider. In some embodiments, the test element 103 has a zero-balanced account for network access, such that the account does not have any credit for network access. The test element 103 is optional for one or more network segments.

In some embodiments, the test element 103 is requested to access the one or more predetermined IP addresses periodically according to a predetermined schedule. For example, a timestamp associated with a respective request from the test element 103 to a predetermined IP address is predetermined and known. In some embodiments, the test element 103 is located at a fixed and known location within the network segment. In some embodiments, the test element 103 is associated with a fixed and known IP address. In some embodiments, the test element 103 is associated with a predetermined and known device identifier. In some embodiments, a network type associated with the test element 103 is predetermined, fixed, and known.

The data from the test element 103, along with other types of data such as the predetermined requested IP addresses, the test element identifier, the location of the test element 103, the network type associated with the test element 103, and the timestamp associated with a respective request from the test element 103 to a predetermined IP address, are used by the server system 104 as baseline data to be analyzed by a statistical model. The baseline data from the test element 103 may be used as ground-truth data, model training data, model testing data, and/or data for verifying network configuration of a corresponding network segment when applying the model to incoming data from user devices 102.

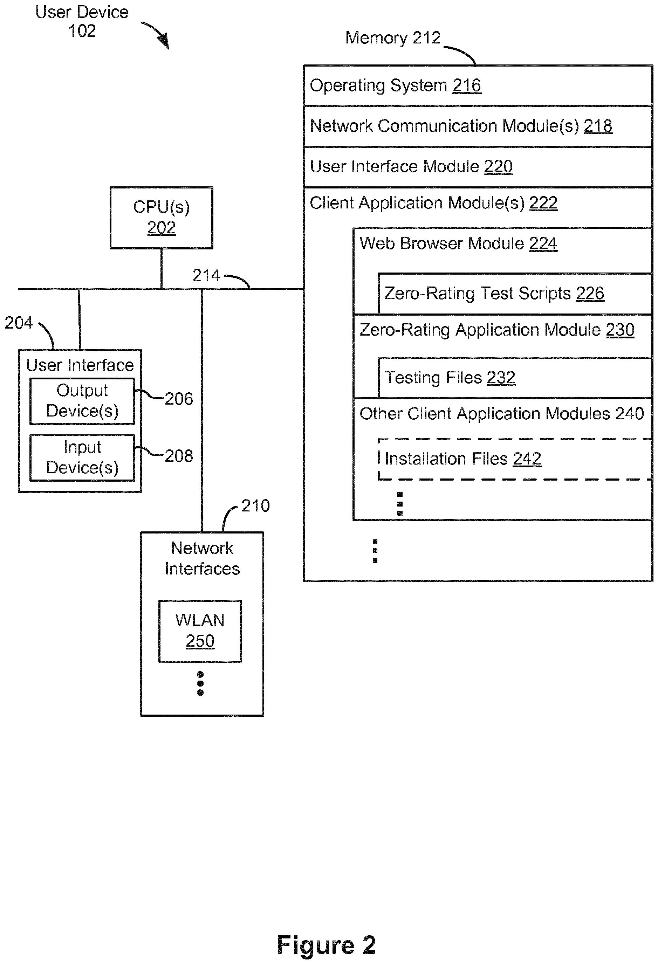

Figure 2 is a block diagram illustrating an exemplary user device 102 (e.g., one of the user devices 102-1 through 102-n, Figure 1) in accordance with some embodiments. The user device 102 typically includes one or more central processing units (CPU(s), e.g., processors or cores) 202, one or more network (or other communications) interfaces 210, memory 212, and one or more communication buses 214 for interconnecting these components. The communication buses 214 optionally include circuitry (sometimes called a chipset) that interconnects and controls communications between system components.

As also shown in Figure 2, the user device 102 includes a user interface 204, including output device(s) 206 and input device(s) 208. In some embodiments, the input devices include a keyboard or track pad. Alternatively, or in addition, in some embodiments, the user interface 204 includes a display device that includes a touch-sensitive surface, in which case the display device is a touch-sensitive display. In user devices that have a touch-sensitive display, a physical keyboard is optional (e.g., a soft keyboard may be displayed when keyboard entry is needed). The output devices (e.g., output device(s) 206) also optionally include speakers or an audio output connection (i.e., audio jack) connected to speakers, earphones, or headphones. Furthermore, some user devices 102 use a microphone and voice recognition device to supplement or replace the keyboard. Optionally, the user device 102 includes an audio input device (e.g., a microphone) to capture audio (e.g., speech from a user). Optionally, the user device 102 includes a location-detection device, such as a GPS (global positioning satellite) or other geo-location receiver, and/or location-detection software for determining the location of the user device 102.

In some embodiments, the one or more network interfaces 210 include wireless and/or wired interfaces for receiving data from and/or transmitting data to other user devices 102, the server system 104, and/or other devices or systems. In some embodiments, data communications are carried out using any of a variety of custom or standard wireless protocols (e.g., NFC, RFID, IEEE 802.15.4, Wi-Fi, ZigBee, 6LoWPAN, Thread, Z-Wave, Bluetooth, ISA100.11a, WirelessHART, MiWi, etc.). Furthermore, in some embodiments, data communications are carried out using any of a variety of custom or standard wired protocols (e.g., USB, Firewire, Ethernet, etc.). For example, in some embodiments, the one or more network interfaces 210 includes a wireless LAN (WLAN) interface 250 for enabling data communications with other WLAN-compatible devices and/or the server system 104 (via the one or more network(s) 112, Figure 1).

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof:
- an operating system 216 that includes procedures for handling various basic system services and for performing hardware dependent tasks;
- network communication module(s) 218 for connecting the user device 102 to other computing devices (e.g., server system 104, user devices 102, and/or other devices) via the one or more network interface(s) 210 (wired or wireless);
- a user interface module 220 that receives commands and/or inputs from a user via the user interface 204 (e.g., from the input devices 208, which may include keyboards, touch screens, microphones, eye tracking components, three-dimensional gesture tracking components, and the like), and provides user interface objects and other outputs for display on the user interface 204 (e.g., the output devices 206, which may include a display screen, a touchscreen, a speaker, etc.);
- one or more client application modules 222, including the following modules (or sets of instructions), or a subset or superset thereof:
   ∘ a web browser module 224 (e.g., Internet Explorer by Microsoft, Firefox by Mozilla, Safari by Apple, Opera by Opera Software, or Chrome by Google) for accessing, viewing, and interacting with web sites (e.g., zero-rated and/or non-zero rated web sites), which includes zero-rating test scripts 226 provided by the server system 104 (e.g., as embedded in a web page) for testing network configuration regarding zero-rating services when executed by the web browser module 224;
   ∘ a zero-rating application module 230 for providing an interface to a zero-rating service (e.g., a zero-rating service provided by the server system 104) and related features, which includes testing files 232 received from the server system 104. For example, the user device 102 runs a Free Basic Services (FBS) application provided by the server system 104. The zero-rating application module 230 may be a part of the FBS application that provides links directly to the server system 104 but with the end destination being the one or more third-party servers 110-1, 110-2, ... 110-p. The server system 104 may act as a proxy and route traffic between the one or more third-party servers 110-1, 110-2, ... 110-p and the user device 102; and
   ∘ other optional client application modules 240, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support, which include installation files 242 corresponding to one or more versions of respective optional client application modules 240.

Each of the above identified modules and applications correspond to a set of executable instructions for performing one or more functions as described above and/or in the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments.

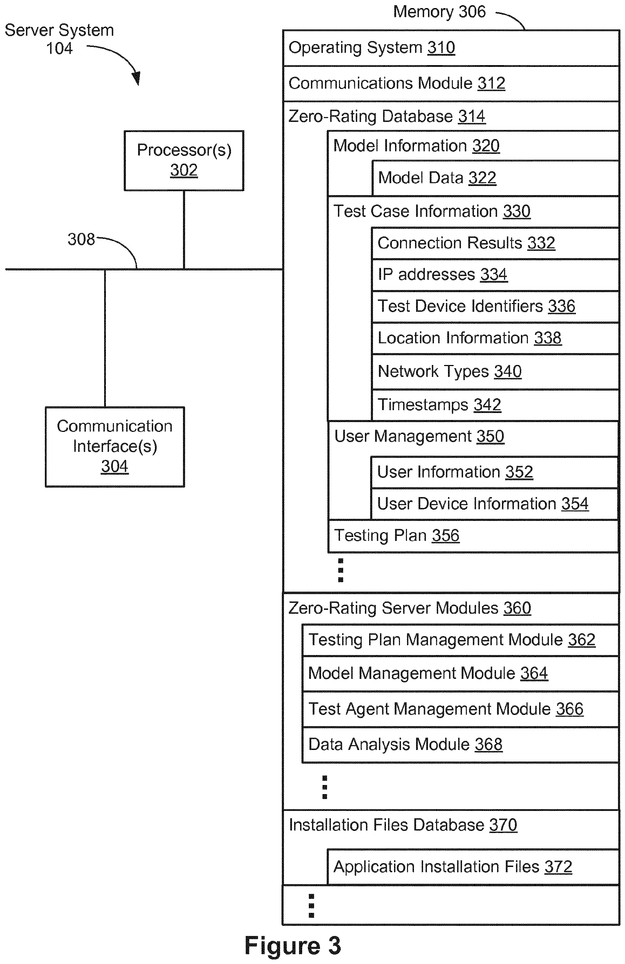

Figure 3 is a block diagram illustrating an exemplary server system 104 in accordance with some embodiments. The server system 104 typically includes one or more processing units (processors or cores) 302, one or more network or other communications interfaces 304, memory 306, and one or more communication buses 308 for interconnecting these components. The communication buses 308 optionally include circuitry (sometimes called a chipset) that interconnects and controls communications between system components. The server system 104 optionally includes a user interface (not shown). The user interface, if provided, may include a display device and optionally includes inputs such as a keyboard, mouse, trackpad, and/or input buttons. Alternatively or in addition, the display device includes a touch-sensitive surface, in which case the display is a touch-sensitive display.

Memory 306 includes high-speed random-access memory, such as DRAM, SRAM, DDR RAM, or other random-access solid-state memory devices; and may include non-volatile memory, such as one or more magnetic disk storage devices, optical disk storage devices, flash memory devices, and/or other non-volatile solid-state storage devices. Memory 306 may optionally include one or more storage devices remotely located from the processor(s) 302. Memory 306, or alternately the non-volatile memory device(s) within memory 306, includes a non-transitory computer-readable storage medium. In some embodiments, memory 306 or the computer-readable storage medium of memory 306 stores the following programs, modules and data structures, or a subset or superset thereof:
∘ an operating system 310 that includes procedures for handling various basic system services and for performing hardware dependent tasks;
∘ a network communication module 312 that is used for connecting the server system 104 to other computers via the one or more communication network interfaces 304 (wired or wireless) and one or more communication networks (e.g., the one or more networks 112);
∘ a zero-rating database 314 for storing data associated with the zero-rating services, which includes:
   ∘ model information 320, which includes model data 322, such as model type information, model format information, and relevant coefficient(s) used for a respective statistic model for checking network configuration regarding zero-rating services; in some embodiments, the model information 320 includes sets of model data 322 for respective statistic models used for different types of applications (e.g., testing zero-rating network configuration, testing free-data abuse, etc.)
   ∘ test case information 330 associated with each test case, including but not limited to:
      ∘ network connection result data 332;
      ∘ IP addresses 334 associated with one or more requests for each test case, including but not limited to one or more predetermined IP addresses (e.g., zero-rated IP addresses and/or non-zero-rated IP addresses) for testing;
      ∘ test device identifiers 336 (e.g., test agent identifiers);
      ∘ location information 338 associated with test devices (e.g., test agents);
      ∘ network type information 340 associated with test devices (e.g., network types and/or network operator information); and
      ∘ timestamps 342 associated with respective requests from the test devices to predetermined IP addresses;
   ∘ user management 350, such as user information 352 and/or user device information 354 (e.g., user device type, user device MAC address, user device identifier, etc.); and
   ∘ testing plan 356 including testing scripts and/or components to be implemented on a user device (e.g., by using browser module 224 or zero-rating application module 230 on the user device 102, Figure 2);
∘ a zero-rating server module 360 for providing zero-rating services and related features (e.g., in conjunction with browser module 224 or zero-rating application module 230 on the user device 102, Figure 2), which includes:
   ∘ a testing plan management module 362 for generating and distributing testing plans 356;
   ∘ a model management module 364 for performing model building, model training, model testing, model applying, and/or model updating;
   ∘ a test agent management module 366 for managing and selecting one or more test agents from among the user devices 102; and
   ∘ a data analysis module 368 for handling test case data 330 received from respective test agents (and optionally test elements) and analyzing the test case data 330 using the model(s) 320; and
∘ an installation files database 370 for storing installation files of applications (e.g., for downloading to and installation on client devices 102, Figure 1), which includes:
   ∘ application installation files 372 for installing an application (e.g., zero-rating application module 230, optional client application modules 240, Figure 2), which may include installation files for a plurality of versions of a respective application.

The zero-rating database 314 stores data associated with the zero-rating services in one or more types of databases, such as graph, dimensional, flat, hierarchical, network, object-oriented, relational, and/or XML databases.

User management information 350 includes user information 352, such as user profiles, login information, privacy and other preferences, biographical data, and the like. In some embodiments, for a given user, the user information 352 includes the user's name, profile picture, contact information, birth date, sex, marital status, family status, employment, education background, preferences, interests, and/or other demographic information.

In some embodiments, the zero-rating server module 360 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

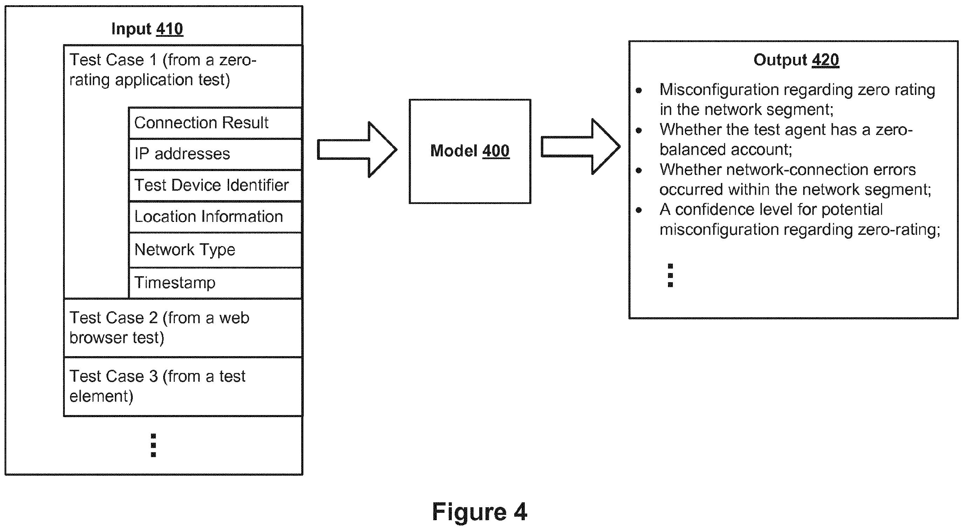

Figure 4 is a block diagram illustrating an exemplary model 400 used for testing network configuration regarding zero-rating in accordance with some embodiments. In some embodiments, the model 400 is a machine-learning model that is built from example inputs and used for making predictions and/or decisions related to network configuration regarding zero-rating. In some embodiments, the server system 104 provides test case data received from the one or more user devices 102 and the one or more test elements 103 to the model 400 for training, testing, and application to obtain the predictions and/or decisions.

In some embodiments, the model 400 includes model information 320 stored in the memory 306 of the server system 104. In some embodiments, the model 400 includes model information that is stored in another storage space entirely or in conjunction with memory 306, and is retrievable and usable by the server system 104 via networks 112. In some embodiments, the model 400 is managed by the model management module 364 of the system server 104. In some embodiments, the model 400 is managed by one or more modules stored in another storage space entirely or in conjunction with memory 306, and is retrievable and usable by the server system 104 via networks 112.

In some embodiments, input data 410 of the model 400 includes data for a plurality of test cases. In some embodiments, a test case (e.g., test case 1) is received from a zero-rating application module (e.g., zero-rating application module 230, Figure 2) executed on a user device 102. In some embodiments, a test case (e.g., test case 2) is received from a web browser module (e.g., web browser module 224, Figure 2) which executes zero-rating testing scripts (e.g., zero-rating test scripts 226, Figure 2.) In some embodiments, a test case (e.g., test case 3) is received from a test element (e.g., test element 103-1, Figure 1) included in a network segment (e.g., network segment 106-1, Figure 1.) In some embodiments, test case information (e.g., test case information 330, Figure 3) for each test case includes one or more data fields, such as a network connection result, a requested IP address, a test device identifier (e.g., a test agent identifier), a location of the test device, a network type associated with the test device, and/or a timestamp associated with a respective request from the test device to a predetermined IP address.

In some embodiments, input data 410 of the model 400 includes a set of data (e.g., ground-truth data) for training and testing the model 400 prior to applying the model 400 to incoming data from any user devices.

In some embodiments, the ground-truth data is collected from the test element 103 of a respective network segment 106 (e.g., test element 103-1 of network segment 106-1, Figure 1.) In some embodiments, one or more data fields of the test element are known, such as the requested IP address, the test element identifier, the location of the test element, the network type associated with the test element, and the timestamp associated with a respective request from the test element to a predetermined IP address. The test element sends network connection results to the server system 104 and the server system 104 feeds the test element data to the model 400 for training and/or testing purposes.

In some embodiments, the ground-truth data is collected from one or more user devices 102 (e.g., test agents) that satisfy a predefined likelihood of having a zero balance for network access. In one example, based on the test case data, the server system 104 may detect that a user device has successfully accessed zero-rated content, but has failed to access non-zero-rated content. In another example, the server system 104 may detect that a request from a user device for non-zero-rated content resulted in a redirect to a portal for zero-rated content. In yet another example, the server system 104 may receive an indication from a network operator and/or a user device that the user device has (or is likely to have) a zero balance for network access. The server system 104 selects such user devices that are likely to have a zero balance as test agents to collect the ground-truth data. In some alternative embodiments, the ground-truth data is collected from one or more user devices 102 that are randomly selected.

In some embodiments, input data 410 of model 400 includes incoming data from any user devices (e.g., test agents) for testing the network configuration regarding zero-rating. The server system 104 may distribute testing plans to all or a plurality of randomly selected user devices, and the input data 410 of the model 400 is collected from a plurality of user devices 102 that implement the testing plans.

The input data 410 is collected from one or more user devices 102 (e.g., test agents) that satisfy a predefined likelihood of having a zero balance for network access. The likelihood of a user device having a zero balance for network access is determined by the server system 104. For example, the server system 104 may detect that a user device has successfully accessed zero-rated content, but has failed to access non-zero-rated content. The server system 104 detects that a request from a user device for non-zero-rated content resulted in a redirect to a portal for zero-rated content. In combination, the likelihood of a user device having a zero balance for network access may be determined by the user device and/or a network operator that provides network services to the user device. For example, the server system 104 may receive an indication from a network operator and/or a user device that the user device has (or is likely to have) a zero balance for network access.

In some embodiments, output data 420 of the model 400 includes a probability of having a network misconfiguration regarding zero-rating in a network segment, a probability that the test device has a zero-balanced account (or whether the test device has a zero-balanced account), and/or a probability of having network-connection errors occurred within a network segment (or whether network errors occurred within a network segment). The output data 420 may also include a confidence level for potential misconfiguration regarding zero-rating within a network segment.

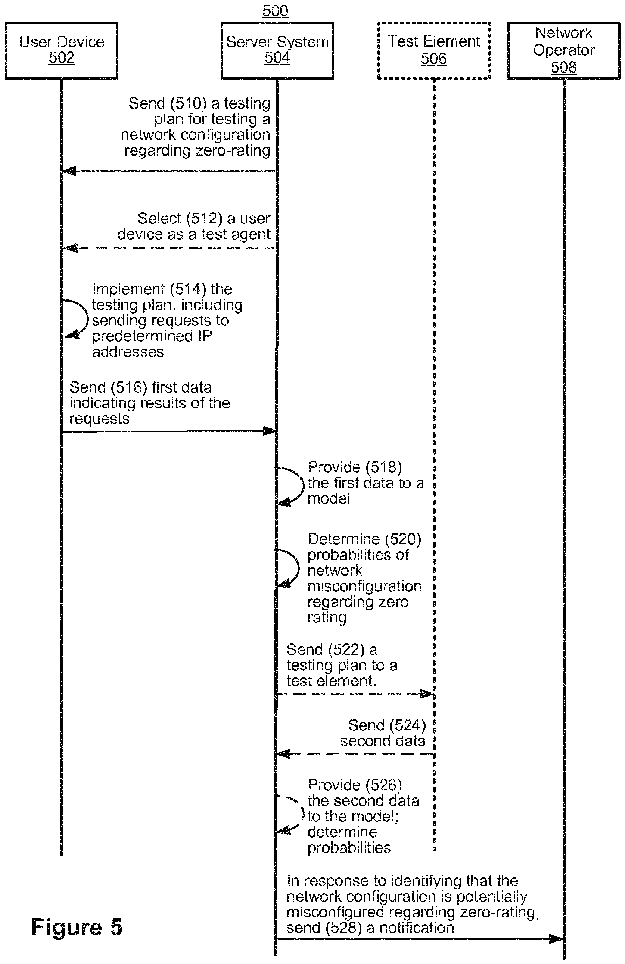

Figure 5 is a flow diagram illustrating a method 500 for distributing testing plans, in accordance with some embodiments. The method 500 is performed by a server system 504 (e.g., server system 104, Figures 1 and 3) and a user device 502 (e.g., user device 102-1, Figures 1 and 2). Operations performed in Figure 5 correspond to instructions stored in computer memories (e.g., memories 212 and 306, Figures 2-3) or other computer-readable storage mediums. The user device 502 can be any user device 102 as explained above with reference to Figures 1-2. For example, the user device 502 may run the testing plan on an application (e.g., Facebook Android app), on a website (e.g., a Facebook website), using a testing tool (e.g., a Facebook Test tool), and/or by a test element (e.g., the test element 103 as explained above with reference to Figure 1).

The server system 504 (e.g., Figures 1 and 3) sends (510) a testing plan (e.g., testing plan 356, Figure 3) to the user device 502. The user device 502 receives the testing plan. The testing plan is used for testing a network configuration regarding zero-rating and includes instructions for causing the user device 502 to send one or more requests to one or more respective predetermined IP addresses. The one or more predetermined IP addresses include one or more zero-rated IP addresses. In some embodiments, the predetermined IP addresses include one or more non-zero-rated IP addresses. The testing plan is sent over the one or more networks 112 (Figure 1).

In some embodiments, the server system 504 sends a testing plan to all user devices (e.g., user devices 102-1, 102-2, ... 102-n, Figure 1.) All the user devices may receive the testing plan. In some embodiments, all the user devices may implement the testing plan (e.g., functioning as test agents). For example, each user device 102 may send one or more requests to one or more predetermined IP addresses.

The server system 504 selects (512) a user device (e.g., user device 502) as a test agent (e.g., test device) to implement the testing plan. In some embodiments, all user devices receive the testing plan from the server system 504, but only the selected one or more test agents implement the testing plan. Alternatively, only the selected test agents receive and implement the testing plan.

Before the user device 502 implements the testing plan, the server system 504 identifies the user device 502 as satisfying a predefined likelihood of having a zero balance for network access, and selects (512) the identified user device as the test agent. Optionally, the server system 504 identifies that the user device 502 has successfully accessed zero-rated content, but has failed to access non-zero-rated content. In response, the server system 504 selects (512) such identified user device as the test agent. The server system 504 detects that a request from the user device 502 to non-zero-rated IP addresses for non-zero-rated content resulted in a redirect to a portal for zero-rated content and, in response, selects (512) such user device as the test agent. The portal may be a web page related to zero-rating services. The portal may include information and/or links for a user of the user device 502 to check the account balance. Additionally, the portal may include information reminding the user of the attempt to access the non-zero-rated IP addresses and may provide options for the user to buy data plan(s) to be used for accessing non-zero-rated IP addresses in the future.

The server system 504 selects one or more user devices 502 as respective test agents based on one or more (e.g., multiple) indications including previous test results. For example, if the network regarding zero rating is properly configured, a user device that has zero balance in a prepaid subscriber identification module (SIM) card coupled to the user device can only access zero-rated IP addresses. By selecting a user device as satisfying a predefined likelihood of having a zero balance for network access as the test agent, the server system 504 can test the network configuration regarding zero rating without integrating with the charging system from any network operator. Thus the system and the method for testing network configuration regarding zero rating can be scalable to any number of network operators with any number of network segments.

The user device 502 implements (514) the testing plan received from the server system 504. The server system 504 causes the user device 502 configured as a test agent to implement the testing plan. The testing plan includes instructions for causing the user device 502 to send one or more requests to one or more respective predetermined IP addresses.

In some embodiments, the testing plan is implemented on an application (e.g., zero-rating application module 230, Figure 2) running on the user device 502. The user device 502 executes the application (e.g., zero-rating application module 230, Figure 2). The application includes instructions for implementing the test plan. In some embodiments, the testing plan is implemented on another type of application (e.g., other client application modules 240, Figure 2), such as a social-networking application running on the user device 502. Installation of the application on the user device 502 configures the user device 502 as a test agent.

In some embodiments, the server system 502 provides a web page having test scripts (e.g., in Javascript) for the testing plan to the user device 502. The testing plan is implemented by a browser (e.g., web browser module 224, Figure 2) which executes the test script on the user device 502. The user device 502 renders the web page having the test script for the testing plan using the browser (e.g., web browser module 224, Figure 2). Serving the web page to the user device 502 configures the user device 502 as a test agent.

By implementing the testing plan, the user device 502 sends one or more requests to the one or more respective predetermined IP addresses. In some embodiments, the one or more requests from the user device 502 may be first forwarded to a server system (e.g., identical with the server system 504 or distinct from the server system 504), and the server system may further route the one or more requests to respective destination IP addresses.

The user device 502 sends (516) data indicating results of the one or more requests to the server system 504. The server system 504 receives the data indicating the results of the one or more requests. The data may be generated based on the one or more requests and respective responses to the one or more requests. The data is used for identifying whether the network configuration is potentially misconfigured regarding zero-rating. In one example, a misconfiguration regarding zero-rating results in a situation where a predetermined zero-rated IP address cannot be accessed for free and/or cannot be accessed at all. In another example, a misconfiguration regarding zero-rating results in a situation where a predetermined non-zero-rated IP address can be accessed for free.

Additionally, the data may be used for identifying network connection error(s) within a network segment associated with the user device 502. For example, the data, used individually or in combination with data collected from other test cases and/or other test agents, may indicate whether there is network congestion within the network segment. When there is network congestion within a network segment, the user device within the network segment may encounter Internet access failures due to insufficient network bandwidth (e.g., bits per seconds), excessive network latency, and/or other performance failures of network connections within the network segment.

In some embodiments, the server system 504 receives data (e.g., test case information 330, Figure 3) indicating the results of the one or more requests from the user device 502. In some alternative embodiments, the server system 504 receives data (e.g., test case information 330, Figure 3) indicating the results of the one or more requests from another entity. For example, the server system 504 may receive the data of the results from the server system used for routing the one or more requests. In another example, the server system 504 may receive the data of the results from a network operator providing network services to the user device 502.

In some embodiments, the data indicating the results of the one or more requests includes one or more fields such as: a network connection result (e.g., whether the network connection to a requested IP address is successful or denied), a requested IP address, a test agent identifier (e.g., a device identifier associated with the user device 502), a location of the test agent, a network type associated with the test agent, and/or a timestamp associated with a respective request from the test agent to a requested IP address. In some embodiments, the server system 504 may further consolidate the received data of one or more fields before feeding the data to a model.

The server system 504 provides (518) the data indicating the results of the one or more requests to a model (e.g., the model 400, Figure 4). The model 400 may be a statistical model for determining probabilities of network misconfiguration regarding zero rating. The model 400 may be a machine learning model built for determining probabilities of network misconfiguration regarding zero rating. In some embodiments, the user device 502 (e.g., user device 102-1, Figure 1) is situated in a network segment (e.g., network segment 106-1, Figure 1) and the model identifies potential misconfiguration for zero-rating in the network segment.

By using the model 400, the server system 504 determines (520) probabilities of network misconfiguration regarding zero rating. In some embodiments, the server system 504 determines one or more probabilities including a probability of misconfiguration regarding zero rating in the network segment, a probability of the test agent has a zero-balanced account, and/or a probability of having network-connection errors occurred within the network segment. In some embodiments, the model 400 outputs a confidence level for potential misconfiguration regarding zero-rating. For example, the confidence level may indicate whether a predication of having a probable misconfiguration regarding zero rating in the network segment is credible or not. The confidence level may be expressed as a percentage number between 0% and 100%. In some embodiments, the model 400 processes the data to update the status of the network configuration in a corresponding network segment based on the determined results of whether there is (or is likely to be) network misconfiguration regarding zero rating.

In some embodiments, the user device 502 (e.g., the test agent) sends requests to one or more predetermined IP addresses including one or more zero-rated IP addresses. The data received at the server system 504 indicate whether the requests from the user device 502 to the one or more zero-rated IP addresses were successful. If the network is properly configured, and if there is no network connection error, the requests for accessing the zero-rated IP addresses should be granted. In some embodiments, the server system 504 applies this principle in the model 400 to identify whether the network configuration is potentially misconfigured regarding zero-rating based on the data. For example, by using the model 400, the server system 504 identifies a potential misconfiguration based at least in part on denial of a request from the user device 502 to at least one of the one or more zero-rated IP addresses. This identification may be based further on a likelihood that the user device 502 has a zero balance for network access.

The user device 502 (e.g., the test agent) sends requests to one or more pre-determined IP addresses including one or more non-zero-rated IP addresses. The data received at the server system 504 indicate whether the requests from the user device 502 to the one or more non-zero-rated IP addresses were denied. It is assumed that if the network is properly configured, for zero-balanced users, the requests for accessing the non-zero-rated IP addresses should be denied. In some embodiments, the server system 504 applies this principle in the model 400 to determine whether the network configuration is potentially misconfigured regarding zero-rating based on the data. For example, by using the model 400, the server system 504 determines the likelihood of the user device 502 to have a zero-balanced account. If the user device 502 is determined to be a possible zero-balanced account, the server system 504 may identify a potential misconfiguration based at least in part on successful access to at least one of the one or more non-zero-rated IP addresses. This may be regarded as a network misconfiguration related to free data abuse, where a zero-balanced user account is able to access a non-zero-rated IP address.

Optionally, a test element 506 (e.g., the test element 103-1, Figure 1) may be used for providing data to the model 400 (e.g., baseline data for training, testing, and using the model 400). The test element 506 may be used in conjunction with other user devices to provide data used by model 400 to determine probabilities regarding network misconfiguration regarding zero-rating. In some embodiments, the test element 506 is a zero-balanced device distinct from the user devices 102. The server system 504 sends (522) a testing plan to the test element 506. The server system 504 causes the test element 506 to send one or more requests to the one or more predetermined IP addresses, including zero-rated IP addresses and/or non-zero-rated IP addresses.

The test element 506 sends (524) data of the test results to the server system 504. The server system 504 receives the data of the test results from the test element 506. The data of the test results may indicate results of the one or more requests send by the test element 506. The server system 504 provides (526) the received data to the model 400. The model 400 may use the data received from the test element 506, along with the data received from the user device 502 and/or other user devices 102, to identify whether the network configuration is potentially misconfigured regarding zero-rating.

In some embodiments, in response to identifying that the network configuration is potentially misconfigured regarding zero-rating, the server system 504 sends (528) a notification (e.g., an alarm) of the potential misconfiguration to a network operator. For example, the user device 502 (e.g., the user device 102-1, Figure 1) is situated in a network segment (e.g., network segment 106-1, Figure 1), and the network operator of the network segment 106-1 is notified. In some embodiments, the server system 504 sends one or more notifications (e.g., an alarm and/or a status update) to one or more parties associated with service(s) provided by the server system 504. For example, the server system 504 provides notifications to one or more users (e.g., service subscribers), one or more network operators, and/or one or more third-party servers.

## Claims

1. A computer-implemented method for distributing testing plans, comprising: at a server (504) having one or more processors and memory storing instructions for execution by the one or more processors, wherein the server (504) is coupled to a plurality of user devices (502):
causing (510, 512) a user device (502) configured as a test agent to implement a testing plan for testing a network configuration regarding zero-rating, comprising causing (514) the test agent to send one or more requests to one or more respective predetermined IP addresses;
receiving (516) first data indicating results of the one or more requests;
using the first data to identify whether the network configuration is potentially misconfigured regarding zero-rating; and
before causing the user device (502) configured as the test agent to implement the testing plan:
identifying the user device (502) as satisfying a predefined likelihood of having a zero balance for network access; and
selecting (512) the identified user device as the test agent, wherein identifying the user device (502) as satisfying the predefined likelihood of having a zero balance comprises detecting that a request from the user device (502) for non-zero-rated content resulted in a redirect to a portal for zero-rated content.

2. The computer-implemented method of claim 1, wherein:
the testing plan is implemented on an application running on the test agent.

3. The computer-implemented method of claim 1 or 2, wherein:
the method further comprises providing a web page having a test script for the testing plan to the test agent; the testing plan being implemented by a browser on the test agent that executes the test script.

4. The computer-implemented method of at least one of claims 1 to 3, wherein:
the one or more predetermined IP addresses include one or more zero-rated IP addresses;
the first data indicate whether requests from the test agent to the one or more zero-rated IP addresses were successful; and
using the first data to identify whether the network configuration is potentially misconfigured regarding zero-rating comprises identifying a potential misconfiguration based at least in part on denial of a request from the test agent to at least one of the one or more zero-rated IP addresses.

5. The computer-implemented method of claim 4, wherein:
the one or more predetermined IP addresses further include one or more non-zero-rated IP addresses;
the first data indicate whether requests from the test agent to the one or more non-zero-rated IP addresses were denied; and
using the first data to identify whether the network configuration is potentially misconfigured regarding zero-rating comprises identifying a potential misconfiguration based at least in part on successful access by the test agent to at least one of the one or more non-zero-rated IP addresses.

6. The computer-implemented method of one or more of claims 1 to 5, wherein the first data includes one or more fields selected from the group consisting of: a network-connection result, a requested IP address, a test-agent identifier, a location of the test agent, a network type associated with the test agent, and a timestamp associated with a respective request from the test agent to a pre-determined IP address.

7. The computer-implemented method of one or more of claims 1 to 6, wherein:
the server is further coupled to a test element, wherein the test element is a zero-balanced device distinct from the plurality of user devices (502), the method further comprising:
causing (522) the test element to send one or more requests to the one or more respective predetermined IP addresses;
receiving (524) second data indicating results of the one or more requests sent by the test element; and,
using the second data along with the first data to identify whether the network configuration is potentially misconfigured regarding zero-rating.

8. The computer-implemented method of one or more of claims 1 to 7, wherein:
using the first data to identify whether the network configuration is potentially misconfigured regarding zero-rating comprises providing the first data to a statistical model for determining probabilities of network misconfiguration regarding zero rating, wherein the test agent is situated in a network segment; and the statistical model determines probabilities of misconfiguration regarding zero rating in the network segment, whether the test agent has a zero-balanced account, and whether network-connection errors occurred within the network segment, wherein the statistical model outputs a confidence level for potential misconfiguration regarding zero-rating.

9. The computer-implemented method of one or more of claims 1 to 8, further comprising:
in response to identifying that the network configuration is potentially misconfigured regarding zero-rating, sending a notification of the potential misconfiguration to a network operator;
wherein:
the test agent is situated in a network segment; and wherein
the network operator is an operator of the network segment.

10. A computer-implemented method for implementing testing plans related to zero-rating according to one of the preceding claims, comprising:
at a computing device (502) having one or more processors and memory storing instructions for execution by the one or more processors:
receiving (510, 512) a testing plan, from a server device (504), for testing a network configuration regarding zero-rating, wherein the testing plan comprises instructions for causing the computing device (502) to send one or
more requests to one or more respective predetermined IP addresses;
sending (514) the one or more requests to the one or more respective predetermined IP addresses;
sending (516) to the server device (504) first data for identifying whether the network configuration is potentially misconfigured regarding zero-rating,
wherein the data is generated based on the one or more requests and respective responses to the one or more requests.

11. The computer-implemented method of claim 10, wherein:
the data includes one or more fields selected from the group comprising:
a network-connection result, a requested IP address, a test-agent identifier, a location of the test agent, a network type associated with the test agent, and a timestamp associated with a respective request from the test agent to a predetermined IP address;
the method further comprising:
executing at the computing device (502) an application including instructions for implementing the testing plan
and the method further comprising:
rendering a web page having a test script for the testing plan at the computing device (502), wherein the testing plan is implemented by a browser on the computing device (502) that executes the test script.

12. The computer-implemented method of claim 10 or 11, further comprising:
before sending the one or more requests to the one or more respective predetermined IP addresses, determining, at the computing device (502), whether the computing device (502) satisfies a predefined likelihood of having a zero-balance for network access,
and comprising:
before sending the one or more requests to the one or more respective predetermined IP addresses, reporting, to the server device (504), a result of the determination.

13. A non-transitory computer-readable storage medium storing one or more programs for execution by one or more processors of an electronic device, the one or more programs including instructions which, when executed on at least one of the one or more processors, cause the at least one processor to execute a computer-implemented method according to one or more of claims 1 to 9, and/or a computer-implemented method according to one or more of claims 10 to 12.

14. A computerized system comprising one or more processors; and one or more memories storing instructions that, when executed by at least one of the one or more processors, cause the system to execute a computer-implemented method according to one or more of claims 1 to 9, and/or a computer-implemented method according to one or more of claims 10 to 12.

## Patentansprüche

1. Ein computerimplementiertes Verfahren zum Verteilen von Testplänen, das Folgendes beinhaltet:
an einem Server (504), der einen oder mehrere Prozessoren und einen Speicher, der Anweisungen zur Ausführung durch den einen oder die mehreren Prozessoren speichert, aufweist, wobei der Server (504) an eine Vielzahl von Benutzergeräten (502) gekoppelt ist:
Veranlassen (510, 512), dass ein als Testmittel konfiguriertes Benutzergerät (502) einen Testplan zum Testen einer Netzwerkkonfiguration hinsichtlich Zero-Rating implementiert, beinhaltend das Veranlassen (514), dass das Testmittel eine oder mehrere Anforderungen an eine oder mehrere jeweilige vorbestimmte IP-Adressen sendet;
Empfangen (516) erster Daten, die Resultate der einen oder mehreren Anforderungen anzeigen;
Verwenden der ersten Daten, um zu identifizieren, ob die Netzwerkkonfiguration hinsichtlich des Zero-Ratings möglicherweise fehlkonfiguriert ist; und
vor dem Veranlassen, dass das als Testmittel konfigurierte Benutzergerät (502) den Testplan implementiert:
Identifizieren, dass das Benutzergerät (502) eine vordefinierte Wahrscheinlichkeit einer Nullbilanz für den Netzwerkzugriff erfüllt; und
Auswählen (512) des identifizierten Benutzergeräts als Testmittel, wobei das Identifizieren, dass das Benutzergerät (502) die vordefinierte Wahrscheinlichkeit einer Nullbilanz erfüllt, das Erfassen, dass eine Anforderung von dem Benutzergerät (502) nach nicht zero-rated Inhalt in einer Weiterleitung zu einem Portal für zero-rated Inhalt resultierte, beinhaltet.

2. Computerimplementiertes Verfahren gemäß Anspruch 1, wobei:
der Testplan in einer Anwendung implementiert wird, die auf dem Testmittel läuft.

3. Computerimplementiertes Verfahren gemäß Anspruch 1 oder 2, wobei:
das Verfahren ferner Folgendes beinhaltet: Bereitstellen einer Webseite, die ein Testskript für den Testplan aufweist, für das Testmittel, wobei der Testplan von einem Browser auf dem Testmittel, welches das Testskript ausführt, implementiert wird.

4. Computerimplementiertes Verfahren gemäß mindestens einem der Ansprüche 1 bis 3, wobei:
die eine oder mehreren vorbestimmten IP-Adressen eine oder mehrere zero-rated IP-Adressen umfassen;
die ersten Daten anzeigen, ob Anforderungen von dem Testmittel an die eine oder mehreren zero-rated IP-Adressen erfolgreich waren; und
das Verwenden der ersten Daten, um zu identifizieren, ob die Netzwerkkonfiguration hinsichtlich des Zero-Ratings möglicherweise fehlkonfiguriert ist, das Identifizieren einer möglichen Fehlkonfiguration, die mindestens teilweise auf der Ablehnung einer Anforderung des Testmittels an mindestens eine der einen oder mehreren zero-rated IP-Adressen basiert, beinhaltet.

5. Computerimplementiertes Verfahren gemäß Anspruch 4, wobei:
die eine oder mehreren vorbestimmten IP-Adressen ferner eine oder mehrere zero-rated IP-Adressen umfassen;
die ersten Daten anzeigen, ob Anforderungen von dem Testmittel an die eine oder mehreren nicht zero-rated IP-Adressen abgelehnt wurden; und
das Verwenden der ersten Daten, um zu identifizieren, ob die Netzwerkkonfiguration hinsichtlich des Zero-Ratings möglicherweise fehlkonfiguriert ist, das Identifizieren einer möglichen Fehlkonfiguration, die mindestens teilweise auf dem erfolgreichen Zugriff durch das Testmittel auf mindestens eine der einen oder mehreren nicht zero-rated IP-Adressen basiert, beinhaltet.

6. Computerimplementiertes Verfahren gemäß einem oder mehreren der Ansprüche 1 bis 5, wobei die ersten Daten ein oder mehrere Felder umfassen, die aus der Gruppe ausgewählt sind, die aus Folgendem besteht: einem Netzwerkverbindungsresultat, einer angeforderten IP-Adresse, einer Testmittelkennung, einem Standort des Testmittels, einem mit dem Testmittel assoziierten Netzwerktyp und einem Zeitstempel, der mit einer jeweiligen Anforderung des Testmittels an eine vorbestimmte IP-Adresse assoziiert ist.

7. Computerimplementiertes Verfahren gemäß einem oder mehreren der Ansprüche 1 bis 6, wobei:
der Server ferner mit einem Testelement gekoppelt ist, wobei das Testelement ein Gerät mit Nullbilanz ist, das sich von der Vielzahl von Benutzergeräten (502) unterscheidet, wobei das Verfahren ferner Folgendes beinhaltet:
Veranlassen (522), dass das Testelement eine oder mehrere Anforderungen an die eine oder mehreren jeweiligen vorbestimmten IP-Adressen sendet;
Empfangen (524) zweiter Daten, die Resultate der einen oder mehreren Anforderungen, die von dem Testelement gesendet wurden, anzeigen; und
Verwenden der zweiten Daten zusammen mit den ersten Daten, um zu identifizieren, ob die Netzwerkkonfiguration hinsichtlich des Zero-Ratings möglicherweise fehlkonfiguriert ist.

8. Computerimplementiertes Verfahren gemäß einem oder mehreren der Ansprüche 1 bis 7, wobei:
das Verwenden der ersten Daten, um zu identifizieren, ob die Netzwerkkonfiguration hinsichtlich des Zero-Ratings möglicherweise fehlkonfiguriert ist, das Bereitstellen der ersten Daten für ein statistisches Modell zum Bestimmen von Wahrscheinlichkeiten einer Netzwerkfehlkonfiguration hinsichtlich des Zero-Ratings beinhaltet, wobei sich das Testmittel in einem Netzwerksegment befindet; und das statistische Modell Folgendes bestimmt: Wahrscheinlichkeiten einer Fehlkonfiguration hinsichtlich des Zero-Ratings in dem Netzwerksegment, ob das Testmittel ein Konto mit Nullbilanz aufweist, und ob Netzwerkverbindungsfehler innerhalb des Netzwerksegments aufgetreten sind, wobei das statistische Modell einen Vertrauensgrad für eine mögliche Fehlkonfiguration hinsichtlich des Zero-Ratings ausgibt.

9. Computerimplementiertes Verfahren gemäß einem oder mehreren der Ansprüche 1 bis 8, das ferner Folgendes beinhaltet:
als Reaktion auf das Identifizieren, dass die Netzwerkkonfiguration hinsichtlich des Zero-Ratings möglicherweise fehlkonfiguriert ist, Senden einer Benachrichtigung über die mögliche Fehlkonfiguration an einen Netzwerkbetreiber;
wobei:
das Testmittel sich in einem Netzwerksegment befindet; und wobei
der Netzwerkbetreiber ein Betreiber des Netzwerksegments ist.

10. Ein computerimplementiertes Verfahren zum Implementieren von Testplänen in Bezug auf Zero-Rating gemäß einem der vorhergehenden Ansprüche, das Folgendes beinhaltet:
an einem Computergerät (502), das einen oder mehrere Prozessoren und einen Speicher, der Anweisungen zur Ausführung durch den einen oder die mehreren Prozessoren speichert, aufweist:
Empfangen (510, 512) eines Testplans von einem Servergerät (504) zum Testen einer Netzwerkkonfiguration hinsichtlich des Zero-Ratings, wobei der Testplan Anweisungen zum Veranlassen, dass das Computergerät (502) eine oder mehrere Anforderungen an eine oder mehrere jeweilige vorbestimmte IP-Adressen sendet, beinhaltet;
Senden (514) der einen oder mehreren Anforderungen an die eine oder mehreren jeweiligen vorbestimmten IP-Adressen;
Senden (516) erster Daten an das Servergerät (504) zum Identifizieren, ob die Netzwerkkonfiguration hinsichtlich des Zero-Ratings möglicherweise fehlkonfiguriert ist,
wobei die Daten basierend auf der einen oder den mehreren Anforderungen und jeweiligen Antworten auf die eine oder mehreren Anforderungen erzeugt werden.

11. Computerimplementiertes Verfahren gemäß Anspruch 10, wobei:
die Daten ein oder mehrere Felder umfassen, die aus der Gruppe ausgewählt sind, die Folgendes beinhaltet:
ein Netzwerkverbindungsresultat, eine angeforderte IP-Adresse, eine Testmittelkennung, einen Standort des Testmittels, einen mit dem Testmittel assoziierten Netzwerktyp und einen Zeitstempel, der mit einer jeweiligen Anforderung des Testmittels an eine vorbestimmte IP-Adresse assoziiert ist;
wobei das Verfahren ferner Folgendes beinhaltet:
Ausführen, auf dem Computergerät (502), einer Anwendung mit Anweisungen zum Implementieren des Testplans,
und wobei das Verfahren ferner Folgendes beinhaltet:
Rendern einer Webseite mit einem Testskript für den Testplan auf dem Computergerät (502), wobei der Testplan von einem Browser auf dem Computergerät (502) implementiert wird, das das Testskript ausführt.

12. Computerimplementiertes Verfahren gemäß Anspruch 10 oder 11, das ferner Folgendes beinhaltet:
vor dem Senden der einen oder mehreren Anforderungen an die eine oder mehreren jeweiligen vorbestimmten IP-Adressen, Bestimmen, an dem Computergerät (502), ob das Computergerät (502) eine vordefinierte Wahrscheinlichkeit einer Nullbilanz für den Netzwerkzugriff erfüllt,
und beinhaltend:
vor dem Senden der einen oder mehreren Anforderungen an die eine oder mehreren jeweiligen vorbestimmten IP-Adressen, Melden, an das Servergerät (504), eines Resultats über die Bestimmung.

13. Ein nicht-transitorisches computerlesbares Speichermedium, das ein oder mehrere Programme zur Ausführung durch einen oder mehrere Prozessoren eines elektronischen Geräts speichert, wobei das eine oder die mehreren Programme Anweisungen umfassen, die, wenn sie auf mindestens einem der einen oder mehreren Prozessoren ausgeführt werden, veranlassen, dass der mindestens eine Prozessor ein computerimplementiertes Verfahren gemäß einem oder mehreren der Ansprüche 1 bis 9 und/oder ein computerimplementiertes Verfahren gemäß einem oder mehreren der Ansprüche 10 bis 12 ausführt.

14. Ein computerbasiertes System, das einen oder mehrere Prozessoren; und einen oder mehrere Speicher, die Anweisungen speichern, die, wenn sie von mindestens einem der einen oder mehreren Prozessoren ausgeführt werden, veranlassen, dass das System ein computerimplementiertes Verfahren gemäß einem oder mehreren der Ansprüche 1 bis 9 und/oder ein computerimplementiertes Verfahren gemäß einem oder mehreren der Ansprüche 10 bis 12 ausführt, beinhaltet.

## Revendications

1. Un procédé mis en œuvre par ordinateur pour distribuer des plans de test, comprenant :
au niveau d'un serveur (504) ayant un ou plusieurs processeurs et de la mémoire stockant des instructions pour exécution par les un ou plusieurs processeurs, le serveur (504) étant couplé à une pluralité de dispositifs utilisateur (502) :
le fait d'amener (510, 512) un dispositif utilisateur (502) configuré comme un agent de test à mettre en œuvre un plan de test pour tester une configuration de réseau en ce qui concerne du trafic gratuit, comprenant le fait d'amener (514) l'agent de test à envoyer une ou plusieurs demandes à une ou plusieurs adresses IP prédéterminées respectives ;
le fait de recevoir (516) des premières données indiquant des résultats des une ou plusieurs demandes ;
le fait d'utiliser les premières données afin d'identifier si la configuration de réseau est potentiellement mal configurée en ce qui concerne du trafic gratuit ; et
avant d'amener le dispositif utilisateur (502) configuré comme agent de test à mettre en œuvre le plan de test :
le fait d'identifier le dispositif utilisateur (502) comme satisfaisant à une vraisemblance prédéfinie d'avoir un solde nul pour l'accès au réseau ; et
le fait de sélectionner (512) le dispositif utilisateur identifié comme agent de test, dans lequel le fait d'identifier le dispositif utilisateur (502) comme satisfaisant à la vraisemblance prédéfinie d'avoir un solde nul comprend le fait de détecter qu'une demande provenant du dispositif utilisateur (502) pour du contenu à trafic non gratuit a eu pour résultat une redirection vers un portail pour contenu à trafic non gratuit.

2. Le procédé mis en œuvre par ordinateur de la revendication 1, dans lequel :
le plan de test est mis en œuvre sur une application tournant sur l'agent de test.

3. Le procédé mis en œuvre par ordinateur de la revendication 1 ou de la revendication 2, dans lequel :
le procédé comprend en outre le fait de fournir une page web ayant un script de test pour le plan de test à l'agent de test ; le plan de test étant mis en œuvre par un navigateur sur l'agent de test qui exécute le script de test.

4. Le procédé mis en œuvre par ordinateur d'au moins l'une des revendications 1 à 3, dans lequel :
les une ou plusieurs adresses IP prédéterminées incluent une ou plusieurs adresses IP à trafic gratuit ;
les premières données indiquent si des demandes de l'agent de test aux une ou plusieurs adresses IP à trafic gratuit ont réussi ; et
le fait d'utiliser les premières données afin d'identifier si la configuration de réseau est potentiellement mal configurée en ce qui concerne du trafic gratuit comprend le fait d'identifier une mauvaise configuration potentielle sur la base au moins en partie d'un refus d'une demande de l'agent de test à au moins une adresse parmi les une ou plusieurs adresses IP à trafic gratuit.

5. Le procédé mis en œuvre par ordinateur de la revendication 4, dans lequel :
les une ou plusieurs adresses IP prédéterminées incluent en outre une ou plusieurs adresses IP à trafic non gratuit ;
les premières données indiquent si des demandes de l'agent de test aux une ou plusieurs adresses IP à trafic non gratuit ont fait l'objet d'un refus ; et
le fait d'utiliser les premières données afin d'identifier si la configuration de réseau est potentiellement mal configurée en ce qui concerne du trafic gratuit comprend le fait d'identifier une mauvaise configuration potentielle sur la base au moins en partie d'un accès réussi par l'agent de test à au moins une adresse parmi les une ou plusieurs adresses IP à trafic non gratuit.

6. Le procédé mis en œuvre par ordinateur d'une ou de plusieurs des revendications 1 à 5, dans lequel les premières données incluent un ou plusieurs champs sélectionnés dans le groupe constitué : d'un résultat de connexion au réseau, d'une adresse IP demandée, d'un identificateur d'agent de test, d'un emplacement de l'agent de test, d'un type de réseau associé à l'agent de test, et d'une estampille temporelle associée à une demande respective de l'agent de test à une adresse IP prédéterminée.

7. Le procédé mis en œuvre par ordinateur d'une ou de plusieurs des revendications 1 à 6, dans lequel :
le serveur est en outre couplé à un élément de test, l'élément de test étant un dispositif à solde nul distinct de la pluralité de dispositifs utilisateur (502), le procédé comprenant en outre :
le fait d'amener (522) l'élément de test à envoyer une ou plusieurs demandes aux une ou plusieurs adresses IP prédéterminées respectives ;
le fait de recevoir (524) des deuxièmes données indiquant des résultats des une ou plusieurs demandes envoyées par l'élément de test ; et,
le fait d'utiliser les deuxièmes données de pair avec les premières données afin d'identifier si la configuration de réseau est potentiellement mal configurée en ce qui concerne du trafic gratuit.

8. Le procédé mis en œuvre par ordinateur d'une ou de plusieurs des revendications 1 à 7, dans lequel :
le fait d'utiliser les premières données afin d'identifier si la configuration de réseau est potentiellement mal configurée en ce qui concerne du trafic gratuit comprend le fait de fournir les premières données à un modèle statistique pour déterminer des probabilités de mauvaise configuration de réseau en ce qui concerne du trafic gratuit, dans lequel l'agent de test est situé dans un segment de réseau ; et le modèle statistique détermine des probabilités de mauvaise configuration en ce qui concerne du trafic gratuit dans le segment de réseau, si l'agent de test a un compte à solde nul, et si des erreurs de connexion au réseau se sont produites dans le segment de réseau, le modèle statistique délivrant un niveau de confiance pour une mauvaise configuration potentielle en ce qui concerne du trafic gratuit.

9. Le procédé mis en œuvre par ordinateur d'une ou de plusieurs des revendications 1 à 8, comprenant en outre :
en réponse au fait d'identifier que la configuration de réseau est potentiellement mal configurée en ce qui concerne du trafic gratuit, le fait d'envoyer une notification de la mauvaise configuration potentielle à un opérateur de réseau ;
dans lequel :
l'agent de test est situé dans un segment de réseau ; et dans lequel
l'opérateur de réseau est un opérateur du segment de réseau.

10. Un procédé mis en œuvre par ordinateur pour mettre en œuvre des plans de test relatifs à du trafic gratuit selon l'une des revendications précédentes, comprenant :
au niveau d'un dispositif informatique (502) ayant un ou plusieurs processeurs et de la mémoire stockant des instructions pour exécution par les un ou plusieurs processeurs :
le fait de recevoir (510, 512) un plan de test, en provenance d'un dispositif serveur (504), pour tester une configuration de réseau en ce qui concerne du trafic gratuit, le plan de test comprenant des instructions pour amener le dispositif informatique (502) à envoyer une ou plusieurs demandes à une ou plusieurs adresses IP prédéterminées respectives ;
le fait d'envoyer (514) les une ou plusieurs demandes aux une ou plusieurs adresses IP prédéterminées respectives ;
le fait d'envoyer (516) au dispositif serveur (504) des premières données pour identifier si la configuration de réseau est potentiellement mal configurée en ce qui concerne du trafic gratuit, les données étant générées sur la base des une ou plusieurs demandes et de réponses respectives aux une ou plusieurs demandes.

11. Le procédé mis en œuvre par ordinateur de la revendication 10, dans lequel :
les données incluent un ou plusieurs champs sélectionnés dans le groupe comprenant :
un résultat de connexion au réseau, une adresse IP demandée, un identificateur d'agent de test, un emplacement de l'agent de test, un type de réseau associé à l'agent de test, et une estampille temporelle associée à une demande respective de l'agent de test à une adresse IP prédéterminée ;
le procédé comprenant en outre :
le fait d'exécuter au niveau du dispositif informatique (502) une application incluant des instructions pour mettre en œuvre le plan de test
et le procédé comprenant en outre :
le fait de rendre une page web ayant un script de test pour le plan de test au niveau du dispositif informatique (502), le plan de test étant mis en œuvre par un navigateur sur le dispositif informatique (502) qui exécute le script de test.

12. Le procédé mis en œuvre par ordinateur de la revendication 10 ou de la revendication 11, comprenant en outre :
avant d'envoyer les une ou plusieurs demandes aux une ou plusieurs adresses IP prédéterminées respectives, le fait de déterminer, au niveau du dispositif informatique (502), si le dispositif informatique (502) satisfait à une vraisemblance prédéfinie d'avoir un solde nul pour l'accès au réseau,
et comprenant :
avant d'envoyer les une ou plusieurs demandes aux une ou plusieurs adresses IP prédéterminées respectives, le fait de rapporter, au dispositif serveur (504), un résultat de la détermination.

13. Un support de stockage non transitoire lisible par ordinateur stockant un ou plusieurs programmes pour exécution par un ou plusieurs processeurs d'un dispositif électronique, les un ou plusieurs programmes incluant des instructions qui, lorsqu'elles sont exécutées sur au moins l'un des un ou plusieurs processeurs, amènent l'au moins un processeur à exécuter un procédé mis en œuvre par ordinateur selon une ou plusieurs des revendications 1 à 9, et/ou un procédé mis en œuvre par ordinateur selon une ou plusieurs des revendications 10 à 12.

14. Un système informatisé comprenant un ou plusieurs processeurs ; et une ou plusieurs mémoires stockant des instructions qui, lorsqu'elles sont exécutées par au moins l'un des un ou plusieurs processeurs, amènent le système à exécuter un procédé mis en œuvre par ordinateur selon une ou plusieurs des revendications 1 à 9, et/ou un procédé mis en œuvre par ordinateur selon une ou plusieurs des revendications 10 à 12.
